(19) **Europäisches Patentamt**

**European Patent Office**

**Office européen des brevets**

(11) **EP 1 441 330 B1**

(12) **EUROPEAN PATENT SPECIFICATION**

| | |
|---|---|
| (45) Date of publication and mention of the grant of the patent: **25.01.2006 Bulletin 2006/04** | (51) Int Cl.: **G10L 19/14** (2006.01)    **G10L 19/02** (2006.01) **G10L 21/02** (2006.01) |

(21) Application number: **03257940.1**

(22) Date of filing: **17.12.2003**

(54) **Method of encoding and/or decoding digital audio using time-frequency correlation and apparatus performing the method**

Encodier- und/oder Decodierverfahren für digitale Audiosignale, basierend auf Zeit-Frequenzkorrelation und Vorrichtung hierzu

Procédé et dispositif de codage/décodage de signaux audio, basés sur une corrélation temps/fréquence

(84) Designated Contracting States:
**AT BE BG CH CY CZ DE DK EE ES FI FR GB GR HU IE IT LI LU MC NL PT RO SE SI SK TR**

(30) Priority: **23.12.2002 KR 2002082380**

(43) Date of publication of application:
**28.07.2004 Bulletin 2004/31**

(73) Proprietor: **SAMSUNG ELECTRONICS CO., LTD. Suwon-si, Gyeonggi-do (KR)**

(72) Inventors:
• **Manu, Mathew**
 **Yeongtong-gu,**
 **Suwon-si,**
 **Gyeonggi-do (KR)**
• **Chang, Ki-seok**
 **Yeongtong-gu,**
 **Suwon-si,**
 **Gyeonggi-do (KR)**

(74) Representative: **Robinson, Ian Michael et al Appleyard Lees, 15 Clare Road Halifax HX1 2HY (GB)**

(56) References cited:
**WO-A-98/42083**

• **DIETZ M ET AL: "SPECTRAL BAND REPLICATION, A NOVEL APPROACH IN AUDIO CODING" AUDIO ENGINEERING SOCIETY CONVENTION PAPER, NEW YORK, NY, US, vol. 112, no. 5553, 10 May 2002 (2002-05-10), pages 1-8, XP009020921**
• **BRANDENBURG K ET AL: "MPEG-4 NATURAL AUDIO CODING" SIGNAL PROCESSING. IMAGE COMMUNICATION, ELSEVIER SCIENCE PUBLISHERS, AMSTERDAM, NL, vol. 15, January 2000 (2000-01), pages 423-444, XP000885372 ISSN: 0923-5965**

**Description**

The present invention relates to a digital audio encoding and/or decoding method and an apparatus performing the same, and more particularly, to an audio encoding and/or decoding method for improving a prior art encoding and decoding apparatus such that better sound quality is provided at a lower bitrate.

Audio encoders and decoders, that is, audio codecs, are widely used because they enable users to send music files through the Internet at a lower bitrate. Among audio codecs, MP3 codecs that are used to share music files through the Internet and to play music files in portable audio players have become standard. The number of MP3 music files available on the Internet and the users sharing MP3 music files are increasing exponentially.

In the audio coding field a great amount of research and development has been performed in order to implement audio codecs that can compress an audio signal at a low bitrate while maintaining the original sound quality. These audio codecs include motion picture experts group (MPEG)-1 layer 3, MPEG-2 advanced audio coding (AAC), MPEG-4, and Windows Media Audio (WMA).

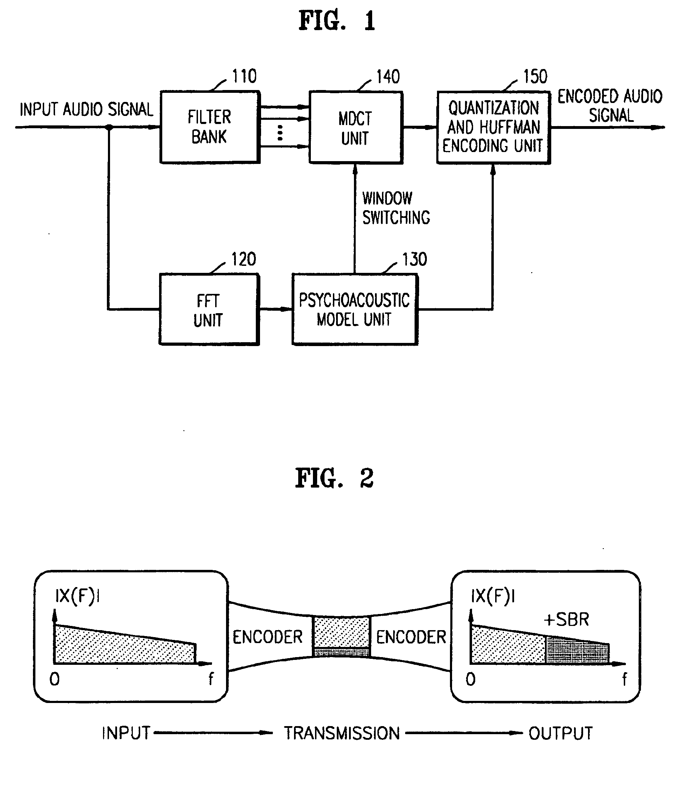

Figure 1 is a block diagram of a prior art MPEG audio encoding apparatus. Here, an MPEG-1 layer 3 audio encoder, that is, an MP3 audio encoder, will now be explained as an example.

MP3 audio encoders comprise a filter bank 110, a fast Fourier transform (FFT) unit 120, a psychoacoustic model unit 130, a modified discrete cosine transform (MDCT) unit, and a quantization and Huffman encoding unit 150.

The filter bank 110 divides an input time-domain audio signal into 32 frequency-domain subbands in order to remove the statistical redundancy of the audio signal.

The FFT unit 120 converts the input audio signal into a frequency-domain spectrum and outputs the spectrum to the psychoacoustic model unit 130.

In order to remove perceptual redundancy resulting from the characteristics of human hearing, by using the frequency spectrum output from the FFT unit 120, the psychoacoustic model unit 130 determines a masking threshold which is a noise level a human-being cannot perceive, that is, a signal to mask ratio (SMR), for each subband. The SMR value determined in the psychoacoustic model unit 130 is input to the quantization and Huffman encoding unit 150.

Also, the psychoacoustic model unit 130 determines whether or not to switch a window, by calculating perceptual energy, and outputs the window switching information to the MDCT unit 140.

In order to increase frequency resolution, the MDCT unit 140 divides the subbands that are divided in the filter bank 110, into finer frequency bands, by using the window switching information input from the psychoacoustic model unit 130.

Based on the SMR value input from the psychoacoustic model unit 140, the quantization and Huffman encoding unit 150 processes the frequency-domain data, which is input from the MDCT unit 140 after being MDCT transformed, by performing bit allocation for removing perceptual redundancy and quantization for audio signal encoding.

The audio encoding method using a psychoacoustic model shown in Figure 1 is disclosed in U.S. Patent No. 6,092,041. Since audio codecs such as the MP3 encoder shown in Figure 1 perform encoding and decoding at low bitrates, the output audio quality is degraded.

According to the present invention there is provided an apparatus and method as set forth in the appended claims. Preferred features of the invention will be apparent from the dependent claims, and the description which follows.

The present invention provides an audio encoding method and apparatus by which the performance of the prior art encoding apparatus is improved such that better sound quality is provided at a lower bitrate.

The present invention also provides an audio decoding method and apparatus by which the performance of the prior art decoding apparatus is improved such that better sound quality is provided at a lower bitrate.

According to an aspect of the present invention, there is provided a digital audio signal encoding method comprising: (a) based on an input audio signal, generating a time-frequency band table wherein each element of said time-frequency table has a plurality of spectrum coefficients, and wherein said time-frequency band table covers a plurality of frequency bands in a time frame of the digital audio signal, and a plurality of subsequent time frames; (b) based on the generated time-frequency band table, searching for a nearest neighbor block of a block being currently encoded, and generating information on the nearest neighbor block; and (c) generating a bitstream containing the generated information on the nearest neighbor block.

According to another aspect of the present invention, there is provided a digital audio signal encoding method comprising: (a) based on an input audio signal, generating a time-frequency band table wherein each element of said time-frequency table has a plurality of spectrum coefficients, and wherein said time-frequency band table covers a plurality of frequency bands in a time frame of the digital audio signal, and a plurality of subsequent time frames; (b) based on the generated time-frequency band table, searching for a nearest neighbor block of a block being currently encoded; (c) based on the nearest neighbor block searched for, determining whether or not a block being currently encoded is a redundant block; and (d) based on the result determined in step (c), generating an output bitstream.

According to still another aspect of the present invention, there is provided a digital audio signal encoding apparatus comprising: a time-frequency band table generation unit which is adapted to based on an input audio signal, generate a time-frequency band table wherein each element of said time-frequency table has a plurality of spectrum coefficients, and wherein said time-frequency band table covers a plurality of frequency bands in a time frame of the digital audio signal, and a plurality of subsequent time frames; a nearest neighbor block searching and nearest neighbor block information generation unit which is adapted to, based on the generated time-frequency band table, search for a nearest neighbor block of a block being currently encoded, and to generate information on the nearest neighbor block; and a bitstream packing unit which is adapted to generate a bitstream containing the generated information on the nearest neighbor block.

According to yet still another aspect of the present invention, there is provided a digital audio signal encoding apparatus comprising: a time-frequency band table generation unit which is adapted to, based on an input audio signal, generate a time-frequency band tablet wherein each element of said time-frequency table has a plurality of spectrum coefficients, and wherein said time-frequency band table covers a plurality of frequency bands in a time frame of the digital audio signal, and a plurality of subsequent time frames, a nearest neighbor block searching unit which is adapted to, based on the generated time-frequency band table, search for a nearest neighbor block of a block being currently encoded; a redundant block decision unit which is adapted to, based on the nearest neighbor block, determine whether or not a block being currently encoded is a redundant block; and a bitstream generation unit which is adapted to, based on the result determined in the redundant block decision unit, generate an output bitstream.

According to a further aspect of the present invention, there is provided a decoding method for decoding an audio signal containing additional information on a predetermined region of the audio signal, comprising: (a) decoding a block which is not included in the predetermined region, from an input audio bitstream; (b) based on the decoded block data, generating a time-frequency band table corresponding to the predetermined region wherein each element of said time-frequency table has a plurality of spectrum coefficients, and wherein said time-frequency band table covers a plurality of frequency bands in a time frame of the digital audio signal, and a plurality of subsequent time frames; and (c) by using the generated time-frequency band table, reconstructing a current block included in the predetermined region, based on the additional information on the predetermined region of the audio signal.

According to an additional aspect of the present invention, there is provided a decoding method for decoding a digital audio signal comprising: (a) extracting nearest neighbor block information from an input audio bitstream; (b) based on the input audio bitstream, generating a time-frequency band table wherein each element of said time-frequency table has a plurality of spectrum coefficients, and wherein said time-frequency band table covers a plurality of frequency bands in a time frame of the digital audio signal, and a plurality of subsequent time frames; (c) based on the extracted nearest neighbor block information, determining whether or not a block being currently decoded is a redundant block; and (d) if the block being currently decoded is a redundant block, by using the generated time-frequency band table, reconstructing the redundant block, based on the extracted nearest neighbor block information. The method may also comprise reconstructing an entire spectrum corresponding to the input audio bitstream by using the reconstructed redundant block.

According to an aspect of the present invention, there is provided a decoding apparatus for decoding an audio signal containing additional information on a predetermined region of the audio signal, comprising: a decoding unit which is adapted to decode a block which is not included in the predetermined region, from an input audio bitstream; and a post-processing unit which is adapted to, based on the decoded block data, generate a time-frequency band table corresponding to the predetermined region, and by using the generated time-frequency band table, to reconstruct a current block included in the predetermined region, based on the additional information on the predetermined region of the audio signal wherein each element of said time-frequency table has a plurality of spectrum coefficients, and wherein said time-frequency band table covers a plurality of frequency bands in a time frame of the digital audio signal, and a plurality of subsequent time frames.

According to another aspect of the present invention, there is provided a decoding apparatus for decoding a digital audio signal comprising: a nearest neighbor block information extracting unit which is adapted to extract nearest neighbor block information from an input audio bitstream; a time-frequency band table generation unit which is adapted to, based on the input audio bitstream, generate a time-frequency band table wherein each element of said time-frequency table has a plurality of spectrum coefficients, and wherein said time-frequency band table covers a plurality of frequency bands in a time frame of the digital audio signal, and a plurality of subsequent time frames; and a redundant block reconstruction unit which is adapted to, based on the extracted nearest neighbor block information, determine whether or not a block being currently decoded is a redundant block, and if the block being currently decoded is a redundant block, by using the generated time-frequency band table, the redundant block reconstruction unit is adapted to reconstruct the redundant block, based on the extracted nearest neighbor block information.

For a better understanding of the invention, and to show how embodiments of the same may be carried into effect, reference will now be made, by way of example, to the accompanying diagrammatic drawings in which:

Figure 1 is a block diagram of a prior art MPEG audio encoding apparatus;

Figure 2 is a diagram for explaining a spectrum band replication method;

Figure 3 is a diagram of an encoding apparatus according to an exemplary embodiment of the present invention;

Figure 4 is a diagram showing a time-frequency band table which is used in the present invention;

Figure 5 is a flowchart of the steps performed by an encoding method according to an exemplary embodiment of the present invention;

Figure 6 is a diagram of an encoding apparatus according to another exemplary embodiment of the present invention;

Figure 7 is a flowchart of the steps performed by an encoding method according to another exemplary embodiment of the present invention;

Figure 8 is a diagram of a decoding apparatus according to an exemplary embodiment of the present invention;

Figure 9 is a flowchart of the steps performed by a decoding method according to an exemplary embodiment of the present invention;

Figure 10 is a diagram of a decoding apparatus according to another exemplary embodiment of the present invention; and

Figure 11 is a flowchart of the steps performed by a decoding method according to another exemplary embodiment of the present invention.

Voice codecs and video codecs use time correlation between signal samples in order to compress data. Voice codecs use a linear prediction coefficient method to perform compression. Meanwhile, video codecs use motion measuring to perform time correlation.

In general, using time correlation for compressing data is not appropriate for audio codecs, since the characteristics of an audio signal are dynamic and have less time correlation. However, in a frequency transform domain, each subband data signal is static in essence compared to those in a time domain. Accordingly, the linear prediction method using correlation between frames is used in the frequency transform domain.

For example, in order to achieve a better compression ratio, the MPEG-2 AAC performs linear prediction for each transform coefficient. Also, in order to remove long term periodicity, the MPEG-4 AAC uses a long term predictor which is similar to the linear prediction method.

Referring to Figure 2, a spectrum band replication (SBR) method using similarity of spectrum coefficients will now be explained.

The SBR method improves performance of an audio and voice codec at a low bitrate, by increasing an audio band at a given bitrate, or by improving encoding efficiency at a given quality level. See Dietz et .al., "Spectral Band Replication, a Novel Approach in Audio Coding", AES Convention Paper 5553, May 2002.

According to the SBR method shown in Figure 2, an encoder does not encode the high frequency part of a frequency spectrum and encodes only the low frequency part, and then transmits the signal. Then, when the signal is decoded, the high frequency part that is not transmitted is reconstructed based on the spectrum of the low frequency part.

For example, in the prior art encoding method, an MP3 encoder employing the SBR method encodes part of a music signal from 0 to 8 kHz. The MP3 file in which only the part from 0 to 8 kHz is encoded can be decoded by a prior art decoder. Therefore, the SBR method is compatible with the prior art MP3. In the SBR method, in order to reconstruct the high frequency part, that is, the part ranging from 8 kHz to 16 kHz, the harmonic structure of the spectrum is used and also the decoded signal from 0 to 8 kHz is used.

When the SBR method is employed, the narrow audio bandwidth, which is provided at a low bitrate by a codec using the prior art perceptual encoding method, can be expanded such that an analog FM audio bandwidth (15 kHz) or over can be provided. Also, the SBR method improves the performance of a narrow-band speech codec and, for example, it is possible to provide a dedicated voice channel having a 12 kHz audio bandwidth that is used in multilingual broadcasting.

Though additional encoder information for guiding decoding processing is partially processed in the encoder, most steps of the SBR method are performed in the decoder.

From the technical viewpoint, SBR is a method for efficiently encoding a high frequency signal in an audio compression algorithm. An encoding apparatus employing the SBR method transmits only the low frequency part of a spectrum. The omitted high frequency part is generated in a decoding process in the SBR decoder. Instead of transmitting the high frequency part, the decoder employing the SBR method analyzes the spectrum of the low frequency part transmitted by the encoder and reconstructs the high frequency part.

In order to guarantee accurate reconstruction of the high frequency part, some guidance information is transmitted as a bitstream encoded at a low data rate. As a result, the SBR method enables the entire band of an audio signal to be encoded at a very low data rate and at the same time provides greatly improved compression efficiency compared to the prior art MP3 encoders.

Thus, the LPC algorithm uses time correlation, while the SBR algorithm uses the frequency correlation of a signal.

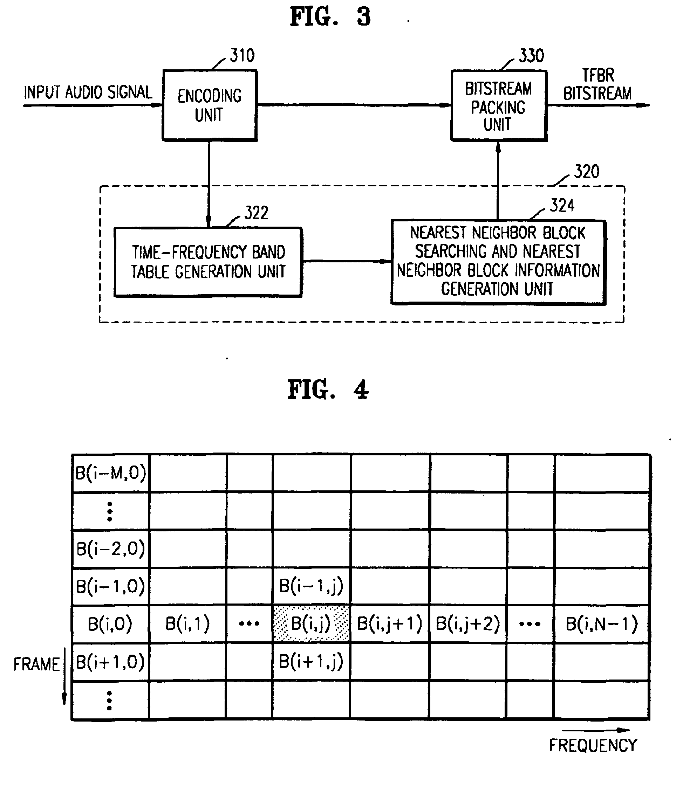

An algorithm according to the present invention uses both the time and frequency dependencies of an audio signal at the same time. Referring to Figures 3 through 11, exemplary embodiments according to the present invention will now be explained.

Figure 3 is a diagram of an exemplary embodiment of the present invention.

Referring to Figures 3 and 4, an audio encoding method according to an exemplary embodiment of the present invention will now be explained.

The encoding apparatus according to the present invention comprises an encoding unit 310, a time-frame band replication (TFBR) unit 320, and a bitstream packing unit 330.

The encoding unit 310 performs a function similar to the prior art audio encoder, that is, the audio encoder shown in Figure 1. Accordingly, a detailed explanation on the function of the encoding unit 310 will be omitted. Though the audio encoder shown in Figure 1 is used in the present embodiment, other audio encoders can also be used.

The TFBR unit 320 comprises a time-frequency band table generation unit 322 and a nearest neighbor block searching and nearest neighbor block information generation unit 324.

The time-frequency band table generation unit 322 divides the data signal, which is MDCT transformed in the encoding unit 310, into N frequency blocks in each frame such that a time-frequency index combination, that is, a time-frequency (TF) band table, shown in Figure 4, is generated.

Though the MDCT transform is used as the time-frequency transform method in the present embodiment, other time-frequency transform methods may also be used.

In the present embodiment, after the MDCT unit of the encoding unit 310 divides the audio signal into a plurality of bands, each band has a plurality of spectrum coefficients. Though bands having an identical width are used in the present embodiment, bands having a variety of widths may also be used.

In Figure 4, i is a frame index, and j=0, 1, 2, ..., j-1, j, j+1, ..., N is a frequency block index of a frame. Here, i denotes a current frame in which encoding is performed, and i-1 and i+1 denote the previous frame and the next frame, respectively. Meanwhile, j denotes a frequency band in which encoding is performed, j=0 indicates the first frequency band in a frame, and j also denotes a frequency band of a block which is desired to be encoded at present. Also, j-1 indicates the previous frequency band.

For example, B(i, j) of Figure 4 indicates a block corresponding to a j-th frequency band in an i-th frame, and the number of spectrum coefficients in each block B(i, j) is identical.

The TFBR method using the TF band table shown in Figure 4 will now be explained in more detail.

The TFBR method according to the present invention uses both the time correlation between frames and the spectrum similarity between frequency bands. Also, the present invention uses the fact that block B(i, j) has a value similar to the value of one block among the previous blocks. This is based on the following facts.

1. The spectrum of the high frequency part and that of the low frequency part in a signal have inherent similarity.

2. Though the entire spectrum of each frame is different, part of the spectrum of a current frame is similar to part of the spectrum of the previous frame.

By using equation 1 below, the nearest neighbor block searching and nearest neighbor block information generation unit 324 searches the previous blocks for a block which is the least different from the current block. Here, the previous blocks include not only j previous blocks in the current frame but also the blocks of a predetermined number of previous frames.

$$D(i,j) = \{ |B(i,j),\ Ck*B(m,n)| \} \qquad \ldots\ldots 1)$$

where B(m, n) denotes an n-th block of an m-th frame.

Here, if the m-th frame is a current frame, m=i, and n=0, 1, .., j-1. If the m-th frame is a previous frame, m=i-1, i-2, i-M+1, and n=0, 1, ..., N-1. Ck is a set of weighting factors, and k=0, 1, ..., K-1.

The nearest neighbor block searching and nearest neighbor block information generation unit 324 determines whether or not block B(i, j) that is currently encoded is included in the high frequency band. If the current block B(i, j) is included in the high frequency band, that is, if j is equal to or greater than a predetermined frequency $J_{TH}$, the m, n, and k values that minimize the difference between B (i, j) and $C_k$B (m, n) are obtained. The m, n, and k values that minimize D(i, j) are designated as $m_{min}$, $n_{min}$, and $k_{min}$, respectively. The determined $m_{min}$ and $n_{min}$ are referred to as the index of the block which is the least different from the current block B(i, j).

It is determined in the present embodiment whether or not to search for a nearest neighbor block, according to whether or not the frequency band of the current block B(i, j) is equal to or greater than a threshold frequency $j_{TH}$, that is, whether or not the current block B(i, j) is included in the high frequency band. However, it may also be determined whether to search for a nearest neighbor block based on whether or not the current block is included in an arbitrary frequency band and time domain.

The function |x,y| used in equation 1 is a distance function. In the present embodiment, the function means Euclidian distance function according to equation 2 below. However, it is possible to selectively use a nearest neighbor classification method using a weighted Euclidian distance function.

$$|x, y| = \sqrt{\sum_{i=1}^{n} (x_i - y_i)^2} \quad \ldots \ldots 2)$$

Equation 2 considers an n-dimensional feature space, and shows a geometrical distance between two points x=(x1, x2, x3, ..., xn) and y=(y1, y2, y3, ..., yn).

The nearest neighbor block searching and nearest neighbor block information generation unit 324 searches for a block having the least distance among the blocks of the previous frame and the previous blocks of the current frame, by using equation 3 below. The nearest neighbor block determined by the nearest neighbor block searching unit 324 is referred to as B ($m_{min}$, $n_{min}$).

D(i, j) of equation 1 is the Euclidian distance between the i, j-th block and a block nearest to the i, j-th block, that is, the Euclidian distance between B(i, j) and $B_{min}$ ($m_{min}$, $n_{min}$).

$D_{min}$ (i, j), which has the minimum value among the D(i, j) values obtained by equation 1 is presented in equation 3 below.

$$D_{min}(i,j) = \left| B(i,j), Ck_{min} * B(m_{min}, n_{min}) \right| \quad \ldots \ldots 3)$$

The bitstream packing unit 330 outputs to the decoder a bitstream containing index information $m_{min}$, $n_{min}$, and $k_{min}$ of the nearest neighbor block, that is, a TFBR bitstream, instead of spectrum information on the block B(i, j). Here, only part of the audio signal corresponding to the frequency band less than $j_{TH}$, is encoded and included in the output bitstream, and the part equal to or greater than $j_{TH}$ is not included in the bitstream.

When a scale factor is not used in searching for a nearest neighbor block, only index information $m_{min}$ and $n_{min}$ are included.

In the present embodiment, in an MPEG bitstream, the nearest neighbor block index information is included in a field called ancillary data 1. However, the information may be selectively included in fields other than the bitstream.

Also, though the objects of searching for a nearest neighbor block are previous blocks in the present embodiment, it may also be possible to selectively search succeeding blocks for a nearest neighbor block.

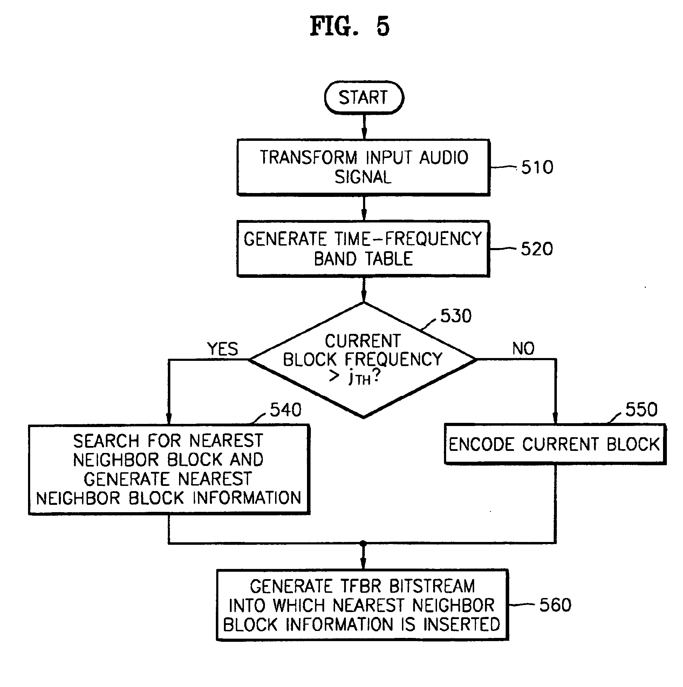

Figure 5 is a flowchart of an audio encoding method according to an exemplary embodiment of the present invention.

In step 510, an audio signal is input and an MDCT which is performed in the prior art audio encoding step is performed on the input time-domain audio signal.

In step 520, the data signal, which underwent MDCT in step 510, is divided into N frequency blocks in each frame and the time-frequency index combination shown in Figure 4, that is, the time-frequency band table, is generated. Though the MDCT transform is used as the time-frequency band transform method in the present embodiment, other time-frequency transform methods may also be used selectively.

In step 530, it is determined whether or not the frequency of the current block B(i, j) is equal to or greater than the threshold frequency $j_{TH}$. The threshold frequency $j_{TH}$ is a threshold frequency value for distinguishing a low frequency part from a high frequency part. If the current block is included in the high frequency band, step 540 is performed, and if it is included in the low frequency band, step 550 is performed.

Though in the present embodiment it is determined whether or not the current block B(i, j) is included in the high frequency band, it may also be determined whether or not the block is included in an arbitrary frequency band and time domain.

In step 540, based on the time-frequency band table generated in step 520, a block $B(m_{min}, n_{min})$ nearest to the current block $B(i, j)$ is searched for in the previous blocks of the current block, and the nearest neighbor block information on the nearest neighbor block $B(m_{min}, n_{min})$ is generated. The nearest neighbor block information includes index information $m_{min}$, $n_{min}$ of $B(m_{min}, n_{min})$. Selectively, when a scale factor is used in searching for a nearest neighbor block, the nearest neighbor block information includes the scale factor $k_{min}$.

In step 550, the current block included in the low frequency band is encoded.

In step 560, a bitstream, that is, a TFBR bitstream, which includes the nearest neighbor block information, that is, the index information $m_{min}$, $n_{min}$, and $k_{min}$ of the nearest neighbor block, which is generated instead of high frequency band data in step 540 and the current block data encoded in step 550, is generated and output.

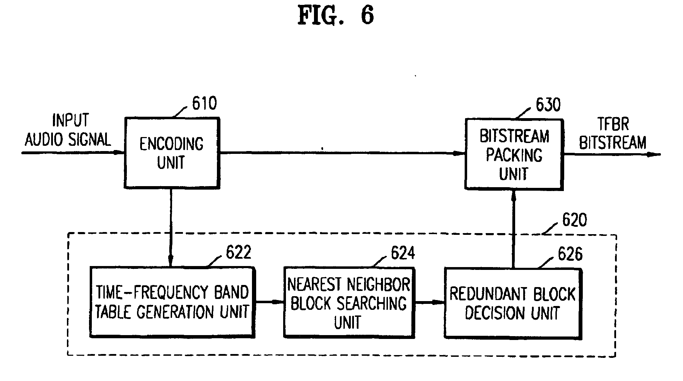

Figure 6 is a diagram of an audio encoding apparatus according to an exemplary embodiment of the present invention.

Referring to Figures 6 and 4, the audio encoding apparatus according to an exemplary embodiment of the present invention will now be explained.

The audio encoding apparatus according to the present invention comprises an encoding unit 610, a TFBR unit 620, and a bitstream packing unit 630.

The TFBR unit 620 comprises a TF band table generation unit 622, a nearest neighbor block searching unit 624, and a redundant block decision unit 626.

Since the encoding unit 610, the TF band table generation unit 622, the nearest neighbor block searching unit 624, and the bitstream packing unit 630 perform the same functions as those of corresponding modules in Figure 3, a detailed explanation thereof will be omitted.

Based on the nearest neighbor block $B(m_{min}, n_{min})$ found in the nearest neighbor block searching unit 624, the redundant block decision unit 626 determines whether or not the current block $B(i, j)$ is a redundant block.

$D(i, j)$ of equation 1 means the Euclidian distance between the current block and a block nearest to the current block, that is, the Euclidian distance between $B(i, j)$ and $B_{min}(m_{min}, n_{min})$.

$D_{min}(i, j)$, which has the minimum value among the $D(i, j)$ values obtained by equation 1 is presented in equation 3 below.

$$D_{min}(i,j) = \left| B(i,j), Ck_{min} * B(m_{min}, n_{min}) \right| \quad \ldots \ldots 3)$$

If $D_{min}(i, j)$ is less than the threshold Tj, the redundant block decision unit 626 determines that the current block $B(i, j)$ is a redundant block, and transmits the index information $m_{min}$, $n_{min}$, and $k_{min}$ of the nearest neighbor block, which is determined in the nearest neighbor block searching unit 624, to the bitstream packing unit 630. Here, the threshold Tj is a threshold in frequency band j, and is an experimentally determined value. In the present embodiment, in an MPEG bitstream, the nearest neighbor block index information is included in the ancillary data 1 field. However, the information may be included selectively in fields other than the bitstream.

Using the nearest neighbor block index information transmitted by the redundant block decision unit 626, the bitstream packing unit 630 outputs to the decoder a bitstream containing index information $m_{min}$, $n_{min}$, and $k_{min}$ of the nearest neighbor block, that is, a TFBR bitstream, instead of spectrum information on the block $B(i, j)$.

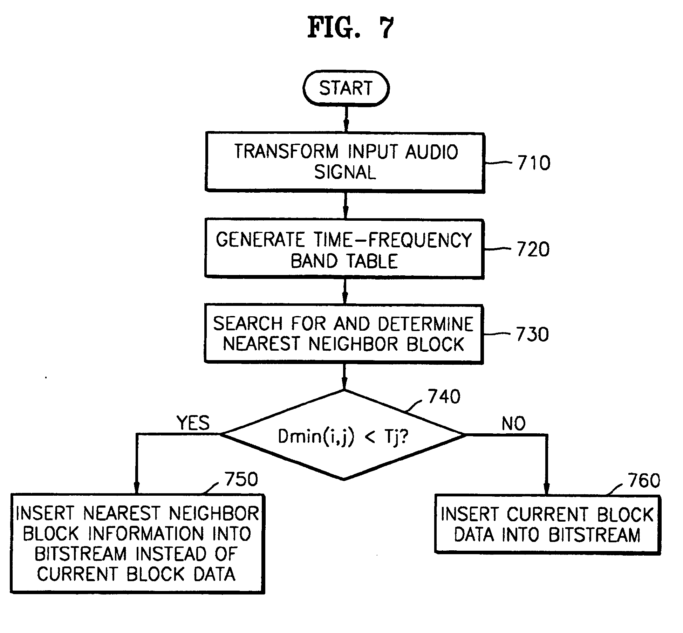

Figure 7 is a flowchart of the steps performed by an audio encoding method according to another exemplary embodiment of the present invention.

In step 710, a time-frequency transform such as an MDCT which is performed in the prior art audio encoding step is performed on an input time-domain audio signal.

In step 720, the data signal, which is MDCT transformed in step 710, is divided into N frequency blocks in each frame and the time-frequency index combination shown in Figure 4, that is, the time-frequency band table, is generated. Though the MDCT transform is used as the time-frequency band transform method in the present embodiment, other time-frequency transform methods may also be used selectively.

In step 730, based on the TF band table generated in step 720, previous blocks of the current block are searched and a block $(m_{min}, n_{min})$ nearest to the current block $B(i, j)$ is determined.

In step 740, by comparing $D_{min}(i, j)$, which is the distance obtained by the equation 3, between the current block $B(i, j)$ and the nearest neighbor block $B(m_{min}, n_{min})$ determined in step 730, with threshold Tj, it is determined whether or not the current block is a redundant block. If $D_{min}(i, j)$ is less than the threshold Tj, step 750 is performed. If $D_{min}(i, j)$ is greater than threshold Tj, step 760 is performed.

In step 750, it is determined whether the current block is a redundant block, and nearest neighbor block information is generated. Also, a bitstream containing index information $m_{min}$, and $n_{min}$ of the nearest neighbor block, that is, a TFBR bitstream, is generated and output instead of spectrum information on the block B(i, j). Selectively, when a scale factor is used in searching for a nearest neighbor block, the nearest neighbor block information contains a scale factor $k_{min}$.

In step 760, it is determined that the current block is a normal block, and a bitstream in which current block data is inserted is generated and output.

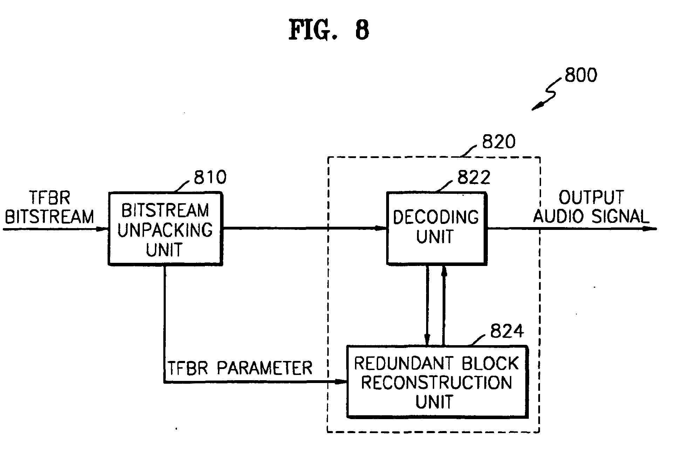

Figure 8 is a diagram of an audio decoding apparatus according to an exemplary embodiment of the present invention.

The audio decoding apparatus 800 shown in Figure 8 comprises a bitstream unpacking unit 810, and a TFBR decoder 820. The TFBR decoder 820 comprises a decoding unit 822 and a redundant block reconstruction unit 824.

The bitstream unpacking unit 810 extracts TFBR parameters from an input TFBR bitstream. The extracted TFBR parameter is input to the redundant block reconstruction unit 824 and the remaining data is input to the decoding unit 822.

If a current block B(i, j) is a normal block, the decoding unit 822 performs a normal audio decoding process. Since the modules forming the decoding unit 822 perform the same functions as those of an ordinary decoder, a detailed explanation thereof will be omitted.

Based on the decoded normal block data and redundant block data input from the redundant block reconstruction unit 824, the decoding unit 822 generates the TF band table shown in Figure 4.

Using the TFBR parameters input from the bitstream unpacking unit 810, that is, the TF band table generated based on the index $m_{min}$, and $n_{min}$ of the nearest neighbor block of the redundant block, the redundant block reconstruction unit 824 approximately reconstructs the redundant block. If the scale factor $k_{min}$ is used when the TFBR encoder unit generates the TFBR parameters, the scale of the nearest neighbor block is adjusted based on the scale factor $k_{min}$ when the redundant block is reconstructed.

If the nearest neighbor block of the redundant block, that is, the nearest neighbor block which is desired to be referred to in order to approximately reconstruct the redundant block, is a redundant block, the block referred to by the nearest neighbor block is used to reconstruct the redundant block.

The redundant block data which is approximately reconstructed in the redundant block reconstruction unit 824 is input to the decoding unit 822.

Using the redundant block data input from the redundant block reconstruction unit 824, the decoding unit 822 reconstructs the entire spectrum and generates an output audio signal. Using the input redundant block data, the decoding unit 822 updates the TF band table and uses the table when next redundant block data is reconstructed.

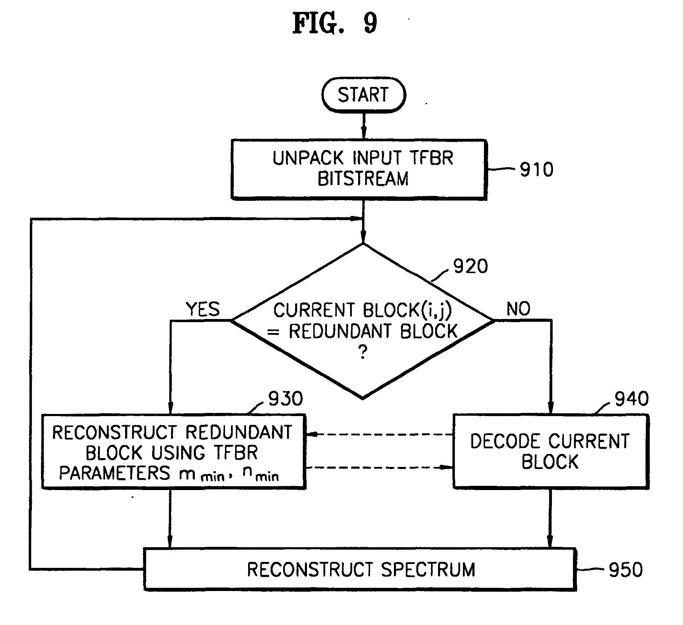

Figure 9 is a flowchart of the steps performed by a decoding method according to an exemplary embodiment of the present invention.

In step 910, the TFBR bitstream transmitted from the encoder is unpacked and the TFBR parameters are extracted.

In step 920, based on the extracted TFBR parameters, it is determined whether or not a block B(i, j) desired to be decoded at present is a redundant block. In the present embodiment, if TFBR parameters corresponding to the current block B(i, j) exist, it is determined that the current block B(i, j) is a redundant block. If it is determined that the current block is a redundant block, step 930 is performed, and if the current block is not a redundant block, step 940 is performed.

In step 930, based on the TFBR parameters, that is, the index $m_{min}$, and $n_{min}$ of the nearest neighbor block of the redundant block, the redundant block is reconstructed. Also, if the scale factor $k_{min}$ is included in the TFBR parameters, the scale of the nearest neighbor block is adjusted based on the scale factor $k_{min}$.

In step 940, it is determined that the current block B(i, j) is a normal block and decoding is performed. Also, in step 940, based on the redundant block data which is reconstructed in step 930, and decoded block data, the TF band table shown in Figure 4 is generated.

In step 950, based on the normal block data decoded in step 940 and the redundant block data reconstructed in step 930, the spectrum is reconstructed, and based on the spectrum an output audio signal is generated.

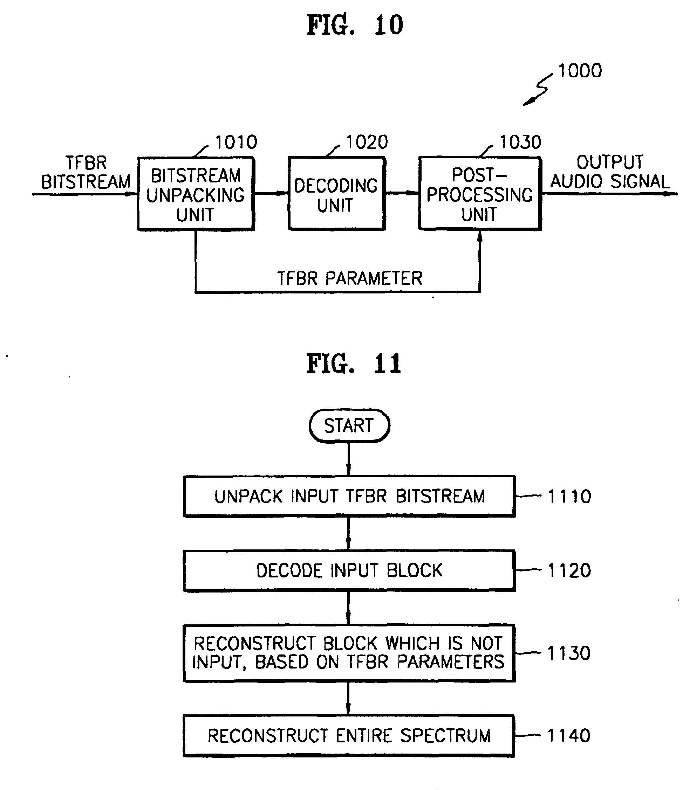

Figure 10 is a diagram of a decoding apparatus according to another exemplary embodiment of the present invention.

The audio decoding apparatus 1000 shown in Figure 10 comprises a bitstream unpacking unit 1010, a decoding unit 1020, and a post-processing unit 1030.

The bitstream unpacking unit 1010 receives the TFBR bitstream generated in the bitstream packing unit 330 of Figure 3, and extracts TFBR parameters from the bitstream. The extracted TFBR parameters are input to the post-processing unit 1030.

The decoding unit 1020 decodes a bitstream corresponding to the low frequency part that is transmitted by an ordinary audio encoder, for example, an MP3 encoder, and sends this to the post-processing unit 1030.

Based on the decoded low frequency part data which is input from the decoding unit 1020, the post-processing unit 1030 generates the TF band table shown in Figure 4, and, based on the TFBR parameters $m_{min}$, and $n_{min}$ that are

input from the bitstream unpacking unit 1010, reconstructs a data block corresponding to the high frequency part. Here, if the scale factor $k_{min}$ is included in the TFBR parameters, the scale is adjusted based on the scale factor $k_{min}$.

Also, based on the reconstructed high frequency block data, the TF band table which is previously generated is updated. The updated TF band table is used when a next high frequency part block is reconstructed.

As a result, since TFBR parameters $m_{min}$, $n_{min}$, and $k_{min}$ have much smaller sizes compared to the size of the original block information, a very small number of additional bits are used. Accordingly, while maintaining the existing transmission bitrate, the sound quality can be effectively improved.

In the present embodiment, it is shown that when high frequency part data is not transmitted, the high frequency part data is restored by using the TFBR parameters. However, the present invention may also be applied selectively to an arbitrary frequency band and frame that are not transmitted.

Figure 11 is a flowchart of the steps performed by a decoding method according to another exemplary embodiment of the present invention.

In step 1110, the TFBR bitstream is unpacked and the TFBR parameters are extracted.

In step 1120, the input low frequency band block data is decoded and the spectrum corresponding to the low frequency part is generated. In the present embodiment, it is assumed that the input bitstream includes only the low frequency band data. However, the present invention may also be applied selectively to a bitstream containing data of any other frequency band.

In step 1130, based on the low frequency part data decoded in step 1120, the TF band table shown in Figure 4 is generated, and based on the TFBR parameters $m_{min}$, and $n_{min}$ that are extracted in step 1110 and the low frequency block decoded in step 1120, the data block corresponding to the high frequency part is reconstructed. Here, if the scale factor $k_{min}$ is included in the input TFBR parameters, the scale is adjusted based on the scale factor $k_{min}$.

In step 1140, by using the blocks of the low frequency part decoded in step 1120 and the blocks of the high frequency part reconstructed in step 1130, the entire spectrum is reconstructed. Also, based on the reconstructed high frequency part block data, the TF band table is updated. The updated TF band table is used when a next high frequency part block is reconstructed.

The present invention is not limited to the exemplary embodiments described above, and it is apparent that variations and modifications by those skilled in the art can be effected within the scope of the present invention as defined by the appended claims. Particularly, the present invention may be applied to not only the MPEG-1 layer 3 but also to all audio encoding apparatuses and methods such as MPEG-2 AAC, MPEG-4, and WMA.

The present invention may be embodied in code, which can be read by a computer, on a computer readable recording medium. The computer readable recording medium includes all kinds of recording apparatuses on which computer readable data are stored. The computer readable recording media includes storage media such as magnetic storage media (e.g., ROM's, floppy disks, hard disks, etc.), optically readable media (e.g., CD-ROMs, DVDs, etc.) and carrier waves (e.g., transmissions over the Internet). Also, the computer readable recording media can be scattered on computer systems connected through a network and can store and execute a computer readable code in a distributed mode.

By using the advanced encoding and decoding method and apparatus according to the present invention described above, the transmission bitrate can be reduced without degradation of sound quality compared to the prior art audio codecs, and sound quality can be improved without raising the transmission bitrate.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

The scope of the invention is thereby limited by the appended claims only.

**Claims**

1. A digital audio signal encoding method comprising:

(a) based on an input audio signal, generating a time-frequency band table wherein each element of said time-frequency table has a plurality of spectrum coefficients, and wherein said time-frequency band table covers a plurality of frequency bands in a time frame of the digital audio signal, and a plurality of subsequent time frames;
(b) based on the generated time-frequency band table, searching for a nearest neighbor block of a block being currently encoded, and generating information on the nearest neighbor block; and
(c) generating a bitstream containing the generated information on the nearest neighbor block.

2. The method of claim 1, wherein in step (b) the frequency of a block being currently encoded is equal to or greater than a threshold frequency, and the bitstream generated in step (c) includes block information on a block included in a frequency band lower than the threshold frequency and nearest neighbor block information of a block included in a frequency band equal to or higher than the threshold frequency.

3. The method of claim 1 or 2, wherein the nearest neighbor block information is index information of the nearest neighbor block, which is searched for, in the time-frequency band table.

4. The method of claim 1, 2 or 3, wherein in step (b) a search scope of the nearest neighbor block includes blocks previous to the block being currently encoded.

5. The method of any preceding claim, wherein in step (b) determination of the nearest neighbor block is based on the Euclidian distance between the current block and an object block.

6. The method of any preceding claim, wherein the nearest neighbor block information includes scale factor information.

7. A digital audio signal encoding method comprising:

(a) based on an input audio signal, generating a time-frequency band table wherein each element of said time-frequency table has a plurality of spectrum coefficients, and wherein said time-frequency band table covers a plurality of frequency bands in a time frame of the digital audio signal, and a plurality of subsequent time frames;
(b) based on the generated time-frequency band table, searching for a nearest neighbor block of a block being currently encoded;
(c) based on the nearest neighbor block searched for, determining whether or not a block being currently encoded is a redundant block; and
(d) based on the result determined in step (c), generating an output bitstream.

8. The method of claim 7, wherein if it is determined in step (c) that the block being currently encoded is the redundant block, the bitstream generated in step (c) includes nearest neighbor block information on the nearest neighbor block searched for in step (b), instead of current block information.

9. The method of claim 8, wherein the nearest neighbor block information is index information of the nearest neighbor block, which is searched for in the time-frequency band table.

10. The method of claim 7, 8 or 9, wherein if it is determined in step (c) that the block being currently encoded is not the redundant block, the bitstream generated in step (d) includes current block information.

11. The method of any of claims 7 to 10, wherein in step (b) a search scope of the nearest neighbor block includes blocks previous to the block being currently encoded.

12. The method of any of claims 7 to 11, wherein in step (b) determination of the nearest neighbor block is based on the Euclidian distance between the current block and an object block.

13. The method of any of claims 7 to 12, wherein the nearest neighbor block information includes scale factor information.

14. A digital audio signal encoding apparatus comprising:

a time-frequency band table generation unit (322) which is adapted to, based on an input audio signal, generate a time-frequency band table wherein each element of said time-frequency table has a plurality of spectrum coefficients, and wherein said time-frequency band table covers a plurality of frequency bands in a time frame of the digital audio signal, and a plurality of subsequent time frames;

a nearest neighbor block searching and nearest neighbor block information generation unit (324) which is adapted to, based on the generated time-frequency band table, search for a nearest neighbor block of a block being currently encoded, and to generate information on the nearest neighbor block; and

a bitstream packing unit (330) which is adapted to generate a bitstream containing the generated information on the nearest neighbor block.

15. The apparatus of claim 14, wherein the frequency of the block being currently encoded is equal to or greater than a threshold frequency, and the bitstream packing unit generates a bitstream including block information on a block included in a frequency band lower than the threshold frequency and nearest neighbor block information of a block included in a frequency band equal to or higher than the threshold frequency.

16. The apparatus of claim 14 or 15, wherein the nearest neighbor block information is index information of the nearest neighbor block, which is searched for in the time-frequency band table.

17. A digital audio signal encoding apparatus comprising:

a time-frequency band table generation unit (622) which adapted to, based on an input audio signal, generate a time-frequency band table wherein each element of said time-frequency table has a plurality of spectrum coefficients, and wherein said time-frequency band table covers a plurality of frequency bands in a time frame of the digital audio signal, and a plurality of subsequent time frames;

a nearest neighbor block searching unit (624) which is adapted to, based on the generated time-frequency band table, search for a nearest neighbor block of a block being currently encoded;

a redundant block decision unit (626) which is adapted to, based on the nearest neighbor block, determine whether or not the block being currently encoded is a redundant block; and

a bitstream generation unit (630) which is adapted to, based on the result determined in the redundant block decision unit, generate an output bitstream.

18. The apparatus of claim 17, wherein, if the redundant block decision unit determines that the block being currently encoded is the redundant block, the bitstream generation unit includes information on the nearest neighbor block which is searched for in the nearest neighbor block searching unit, in the output bitstream instead of current block information.

19. The apparatus of claim 17 or 18, wherein if the redundant decision unit determines that the block being currently encoded is not the redundant block, the bitstream generation unit includes the current block information in the output bitstream.

20. The apparatus of claim 18, wherein the nearest neighbor block information is index information of the nearest neighbor block, which is searched for in the time-frequency band table.

21. A decoding method for decoding an audio signal containing additional information on a predetermined region of the audio signal, comprising:

(a) decoding a block which is not included in the predetermined region, from an input audio bitstream;
(b) based on the decoded block data, generating a time-frequency band table corresponding to the predetermined region wherein each element of said time-frequency table has a plurality of spectrum coefficients, and wherein said time-frequency band table covers a plurality of frequency bands in a time frame of the digital audio signal, and a plurality of subsequent time frames; and
(c) by using the generated time-frequency band table, reconstructing a current block included in the predetermined region, based on the additional information on the predetermined region of the audio signal.

22. The method of claim 21, wherein the additional information includes index information on a nearest neighbor block of a current block in the predetermined region.

23. The method of claim 21 or 22, wherein the predetermined region is a high frequency region.

24. The method of claim 21, 22 or 23, wherein the time-frequency band table generated in step (b) is updated by the current block reconstructed in step (c).

25. The method of claim 21, 22, 23 or 24, wherein the additional information includes scale factor information.

26. A decoding method for decoding a digital audio signal comprising:

(a) extracting nearest neighbor block information from an input audio bitstream;
(b) based on the input audio bitstream, generating a time-frequency band table wherein each element of said time-frequency table has a plurality of spectrum coefficients, and wherein said time-frequency band table covers a plurality of frequency bands in a time frame of the digital audio signal, and a plurality of subsequent time frames;
(c) based on the extracted nearest neighbor block information, determining whether or not a block being currently decoded is a redundant block; and
(d) if the block being currently decoded is the redundant block, by using the generated time-frequency band table, reconstructing the redundant block based on the extracted nearest neighbor block information.

27. The method of claim 26, further comprising reconstructing an entire spectrum corresponding to the input audio bitstream by using the reconstructed redundant block.

28. The method of claim 27, wherein step (c) further comprises:

updating the time-frequency band table based on the reconstructed redundant block.

29. The method of claim 27 or 28, wherein the nearest neighbor block information includes scale factor information.

30. A decoding apparatus for decoding an audio signal containing additional information on a predetermined region of the audio signal, comprising:

a decoding unit (1020) which is adapted to decode a block which is not included in the predetermined region, from an input audio bitstream; and
a post-processing unit (1030) which is adapted to, based on the decoded block data, generate a time-frequency band table corresponding to the predetermined region, and by using the generated time-frequency band table, to reconstruct a current block included in the predetermined region, based on the additional information on the predetermined region of the audio signal wherein each element of said time-frequency table has a plurality of spectrum coefficients, and wherein said time-frequency band table covers a plurality of frequency bands in a time frame of the digital audio signal, and a plurality of subsequent time frames.

31. The apparatus of claim 30, wherein the additional information includes index information on a nearest neighbor block of a current block in the predetermined region.

32. The apparatus of claim 30 or 31, wherein the predetermined region is a high frequency region.

33. The apparatus of claim 30, 31 or 32, wherein the generated time-frequency band table is updated by a reconstructed current block.

34. A decoding apparatus for decoding a digital audio signal comprising:

a nearest neighbor block information extracting unit (810) which is adapted to extract nearest neighbor block information from an input audio bitstream;
a time-frequency band table generation unit (822) which is adapted to, based on the input audio bitstream, generate a time-frequency band table wherein each element of said time-frequency table has a plurality of spectrum coefficients, and wherein said time-frequency band table covers a plurality of frequency bands in a time frame of the digital audio signal, and a plurality of subsequent time frames; and
a redundant block reconstruction unit (824) which is adapted to, based on the extracted nearest neighbor block information, determine whether or not a block being currently decoded is a redundant block, and if the block being currently decoded is the redundant block, by using the generated time-frequency band table, the redundant block reconstruction unit is adapted to reconstruct the redundant block based on the extracted nearest neighbor block information.

**35.** The apparatus of claim 34, wherein the redundant block reconstruction unit reconstructs an entire spectrum corresponding to the input audio bitstream by using the reconstructed redundant block.

**36.** The apparatus of claim 35, wherein the time-frequency band table generation unit updates the time-frequency band table based on the reconstructed redundant block.

**Revendications**

**1.** Procédé de codage de signal audio numérique comportant les étapes consistant à :

(a) sur la base d'un signal audio d'entrée, générer une table de bande de fréquences temporelles, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes,
(b) en se basant sur la table de bande de fréquences temporelles générée, rechercher un bloc voisin le plus proche d'un bloc étant actuellement codé, et générer des informations sur le bloc voisin le plus proche, et
(c) générer un flux binaire contenant les informations générées sur le bloc voisin le plus proche.

**2.** Procédé selon la revendication 1, dans lequel à l'étape (b) la fréquence d'un bloc étant actuellement codé est égale ou supérieure à une fréquence de seuil, et le flux binaire généré à l'étape (c) inclut des informations de bloc sur un bloc inclus dans une bande de fréquences inférieure à la fréquence de seuil et des informations de bloc voisin le plus proche d'un bloc incluses dans une bande de fréquences égale ou supérieure à la fréquence de seuil.

**3.** Procédé selon la revendication 1 ou 2, dans lequel les informations de bloc voisin le plus proche sont des informations d'index du bloc voisin le plus proche, lequel est recherché, dans la table de bande de fréquences temporelles.

**4.** Procédé selon la revendication 1, 2 ou 3, dans lequel à l'étape (b) une portée de recherche du bloc voisin le plus proche inclut des blocs précédant le bloc étant actuellement codé.

**5.** Procédé selon l'une quelconque des revendications précédentes, dans lequel à l'étape (b) la détermination du bloc voisin le plus proche est basée sur la distance euclidienne entre le bloc courant et un bloc objet.

**6.** Procédé selon l'une quelconque des revendications précédentes, dans lequel les informations de bloc voisin le plus proche incluent des informations de facteur d'échelle.

**7.** Procédé de codage de signal audio numérique comportant les étapes consistant à :

(a) sur la base d'un signal audio d'entrée, générer une table de bande de fréquences temporelles, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes,
(b) en se basant sur la table de bande de fréquences temporelles générée, rechercher un bloc voisin le plus proche d'un bloc étant actuellement codé,
(c) en se basant sur le bloc voisin le plus proche recherché, déterminer si oui ou non un bloc étant actuellement codé est un bloc redondant, et
(d) en se basant sur le résultat déterminé à l'étape (c), générer un flux binaire de sortie.

**8.** Procédé selon la revendication 7, dans lequel, s'il est déterminé à l'étape (c) que le bloc étant actuellement codé est le bloc redondant, le flux binaire généré à l'étape (c) inclut des informations de bloc voisin le plus proche sur le bloc voisin le plus proche recherché à l'étape (b), à la place des informations de bloc courant.

**9.** Procédé selon la revendication 8, dans lequel les informations de bloc voisin le plus proche sont des informations d'index du bloc voisin le plus proche, lequel est recherché dans la table de bande de fréquences temporelles.

**10.** Procédé selon la revendication 7, 8 ou 9, dans lequel s'il est déterminé à l'étape (c) que le bloc étant actuellement codé n'est pas le bloc redondant, le flux binaire généré à l'étape (d) inclut des informations de bloc courant.

**11.** Procédé selon l'une quelconque des revendications 7 à 10, dans lequel à l'étape (b) une portée de recherche du bloc voisin le plus proche inclut des blocs précédant le bloc étant actuellement codé.

**12.** Procédé selon l'une quelconque des revendications 7 à 11, dans lequel à l'étape (b) la détermination du bloc voisin le plus proche est basée sur la distance euclidienne entre le bloc courant et un bloc objet.

**13.** Procédé selon l'une quelconque des revendications 7 à 12, dans lequel les informations de bloc voisin le plus proche incluent des informations de facteur d'échelle.

**14.** Dispositif de codage de signal audio numérique comportant :

une unité de génération de table de bande de fréquences temporelles (322) qui est adaptée, sur la base d'un signal audio d'entrée, pour générer une table de bande de fréquences temporelles, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes,
une unité de recherche de bloc voisin le plus proche et de génération d'informations de bloc voisin le plus proche (324) laquelle est adaptée, sur la base de la table de bande de fréquences temporelles générée, pour rechercher un bloc voisin le plus proche d'un bloc étant actuellement codé, et pour générer des informations sur le bloc voisin le plus proche, et
une unité de compactage de flux binaire (330) qui est adaptée pour générer un flux binaire contenant les informations générées sur le bloc voisin le plus proche.

**15.** Dispositif selon la revendication 14, dans lequel la fréquence d'un bloc étant actuellement codé est égale ou supérieure à une fréquence de seuil, et l'unité de compactage de flux binaire génère un flux binaire incluant des informations de bloc sur un bloc inclus dans une bande de fréquences inférieure à la fréquence de seuil et des informations de bloc voisin le plus proche d'un bloc inclus dans une bande de fréquences égale ou supérieure à la fréquence de seuil.

**16.** Dispositif selon la revendication 14 ou 15, dans lequel les informations de bloc voisin le plus proche sont des informations d'index du bloc voisin le plus proche, lequel est recherché dans la table de bande de fréquences temporelles.

**17.** Dispositif de codage de signal audio numérique comportant :

une unité de génération de table de bande de fréquences temporelles (622) qui est adaptée, sur la base du signal audio d'entrée, pour générer une table de bande de fréquences temporelles, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes,
une unité de recherche de bloc voisin le plus proche (624) qui est adaptée, sur la base de la table de bande de fréquences temporelles générée, pour rechercher un bloc voisin le plus proche d'un bloc étant actuellement codé,
une unité de détermination de bloc redondant (626) qui est adaptée, sur la base du bloc voisin le plus proche, pour déterminer si oui ou non le bloc étant actuellement codé est un bloc redondant, et
une unité de génération de flux binaire (630) qui est adaptée, sur la base du résultat déterminé dans l'unité de détermination de bloc redondant, pour générer un flux binaire de sortie.

**18.** Dispositif selon la revendication 17, dans lequel, si l'unité de détermination de bloc redondant détermine que le bloc étant actuellement codé est le bloc redondant, l'unité de génération de flux binaire inclut des informations concernant le bloc voisin le plus proche qui est recherché dans l'unité de recherche de bloc voisin le plus proche, dans le flux binaire de sortie à la place des informations de bloc courant.

**19.** Dispositif selon la revendication 17 ou 18, dans lequel, si l'unité de détermination redondante détermine que le bloc étant actuellement codé n'est pas le bloc redondant, l'unité de génération de flux binaire inclut les informations de bloc courant dans le flux binaire de sortie.

**20.** Dispositif selon la revendication 18, dans lequel les informations de bloc voisin le plus proche sont des informations d'index du bloc voisin le plus proche, qui est recherché dans la table de bande de fréquences temporelles.

21. Procédé de décodage pour décoder un signal audio contenant des informations additionnelles sur une région prédéterminée du signal audio, comportant les étapes consistant à :

   (a) décoder un bloc qui n'est pas inclus dans la région prédéterminée, à partir d'un flux binaire audio d'entrée,
   (b) sur la base de données du bloc décodé, générer une table de bande de fréquences temporelles correspondant à la région prédéterminée, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes, et
   (c) en utilisant la table de bande de fréquences temporelles générée, reconstituer un bloc courant inclus dans la région prédéterminée, sur la base des informations additionnelles sur la région prédéterminée du signal audio.

22. Procédé selon la revendication 21, dans lequel les informations additionnelles incluent des informations d'index sur un bloc voisin le plus proche d'un bloc courant dans la région prédéterminée.

23. Procédé selon la revendication 21 ou 22, dans lequel la région prédéterminée est une région haute-fréquence.

24. Procédé selon la revendication 21, 22 ou 23, dans lequel la table de bande de fréquences temporelles générée à l'étape (b) est mise à jour par le bloc courant reconstitué à l'étape (c).

25. Procédé selon la revendication 21, 22, 23 ou 24, dans lequel les informations additionnelles incluent des informations de facteur d'échelle.

26. Procédé de décodage pour décoder un signal audio numérique comportant les étapes consistant à :

   (a) extraire des informations de bloc voisin le plus proche d'un flux binaire audio d'entrée,
   (b) sur la base du flux binaire audio d'entrée, générer une table de bande de fréquences temporelles, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes,
   (c) sur la base des informations de bloc voisin le plus proche extraites, déterminer si oui ou non un bloc étant actuellement décodé est un bloc redondant, et
   (d) si le bloc étant actuellement décodé est le bloc redondant, en utilisant la table de bande de fréquences temporelles générée, reconstituer le bloc redondant sur la base des informations de bloc voisin le plus proche extraites.

27. Procédé selon la revendication 26, comportant en outre l'étape consistant à reconstituer un spectre entier correspondant au flux binaire audio d'entrée en utilisant le bloc redondant reconstitué.

28. Procédé selon la revendication 27, dans lequel l'étape (c) comporte en outre l'étape consistant à :

   mettre à jour la table de bande de fréquences temporelles sur la base du bloc redondant reconstitué.

29. Procédé selon la revendication 27 ou 28, dans lequel les informations de bloc voisin le plus proche incluent des informations de facteur d'échelle.

30. Dispositif de décodage pour décoder un signal audio contenant des informations additionnelles sur une région prédéterminée du signal audio, comportant :

   une unité de décodage (1020) qui est adaptée pour décoder un bloc qui n'est pas inclus dans la région prédéterminée, à partir d'un flux binaire audio d'entrée, et
   une unité de post-traitement (1030) qui est adaptée, sur la base des données du bloc décodé, pour générer une table de bande de fréquences temporelles correspondant à la région prédéterminée, et en utilisant la table de bande de fréquences temporelles générée, pour reconstituer un bloc courant inclus dans la région prédéterminée, sur la base des informations additionnelles sur la région prédéterminée du signal audio, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes.

**31.** Dispositif selon la revendication 30, dans lequel les informations additionnelles incluent des informations d'index sur un bloc voisin le plus proche d'un bloc courant dans la région prédéterminée.

**32.** Dispositif selon la revendication 30 ou 31, dans lequel la région prédéterminée est une région haute-fréquence.

**33.** Procédé selon la revendication 30, 31 ou 32, dans lequel la table de bande de fréquences temporelles générée est mise à jour par un bloc courant reconstitué.

**34.** Dispositif de décodage pour décoder un signal audio numérique comportant :

une unité d'extraction d'informations de bloc voisin le plus proche (810) qui est adaptée pour extraire des informations de bloc voisin le plus proche d'un flux binaire audio d'entrée,
une unité de génération de table de bande de fréquences temporelles (822) qui est adaptée, sur la base du flux binaire audio d'entrée, pour générer une table de bande de fréquences temporelles, chaque élément de ladite table de fréquences temporelles ayant une pluralité de coefficients de spectre, et ladite table de bande de fréquences temporelles couvrant une pluralité de bandes de fréquences dans une trame temporelle du signal audio numérique, et une pluralité de trames temporelles suivantes, et
une unité de reconstitution de bloc redondant (824) qui est adaptée, sur la base des informations de bloc voisin le plus proche extraites, pour déterminer si oui ou non un bloc étant actuellement décodé est un bloc redondant, et si le bloc étant actuellement décodé est le bloc redondant, en utilisant la table de bande de fréquences temporelles générée, l'unité de reconstitution de bloc redondant est adaptée pour reconstituer le bloc redondant sur la base des informations de bloc voisin le plus proche extraites.

**35.** Dispositif selon la revendication 34, dans lequel l'unité de reconstitution de bloc redondant reconstitue un spectre entier correspondant au flux binaire audio d'entrée en utilisant le bloc redondant reconstitué.

**36.** Dispositif selon la revendication 35, dans lequel l'unité de génération de table de bande de fréquences temporelles met à jour la table de bande de fréquences temporelles sur la base du bloc redondant reconstitué.

**Patentansprüche**

**1.** Verfahren zum Codieren digitaler Audiosignale, das umfasst:

a) auf Basis eines Eingangs-Audiosignals Erzeugen einer Zeit-Frequenzband-Tabelle, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt;
b) auf Basis der erzeugten Zeit-Frequenzband-Tabelle Suchen nach einem nächstgelegenen Nachbarblock eines Blocks, der gegenwärtig codiert wird, und Erzeugen von Informationen über den nächstgelegenen Nachbarblock; und
c) Erzeugen eines Bitstroms, der die erzeugten Informationen über den nächstgelegenen Nachbarblock enthält.

**2.** Verfahren nach Anspruch 1, wobei in Schritt b) die Frequenz eines Blocks, der gegenwärtig codiert wird, einer Schwellenwertfrequenz gleich ist oder darüber liegt und der in Schritt c) erzeugte Bitstrom Blockinformationen über einen Block, der in einem Frequenzband enthalten ist, das unter der Schwellenwertfrequenz liegt, und Informationen über einen nächstgelegenen Nachbarblock eines Blocks enthält, der in einem Frequenzband enthalten ist, das der Schwellenwertfrequenz gleich ist oder darüber liegt.

**3.** Verfahren nach Anspruch 1 oder 2, wobei die Informationen über den nächstgelegenen Nachbarblock Indexinformationen des nächstgelegenen Nachbarblocks sind, nach denen in der Zeit-Frequenzband-Tabelle gesucht wird.

**4.** Verfahren nach Anspruch 1, 2 oder 3, wobei in Schritt b) ein Suchbereich des nächstgelegenen Nachbarblocks Blöcke vor dem Block enthält, der gegenwärtig - codiert wird.

EP 1 441 330 B1

**5.** Verfahren nach einem der vorangehenden Ansprüche, wobei in Schritt b) Bestimmung des nächstgelegenen Nachbarblocks auf dem euklidischen Abstand zwischen dem aktuellen Block und einem Objektblock basiert.

**6.** Verfahren nach einem der vorangehenden Ansprüche, wobei die Informationen über den nächstgelegenen Nachbarblock Skalierungsfaktorinformationen enthalten.

**7.** Verfahren zum Codieren digitaler Audiosignale, das umfasst:

a) auf Basis eines Eingangs-Audiosignals Erzeugen einer Zeit-Frequenzband-Tabelle, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt;
b) auf Basis der erzeugten Zeit-Frequenzband-Tabelle Suchen nach einem nächstgelegenen Nachbarblock eines Blocks, der gegenwärtig codiert wird;
c) auf Basis des gesuchten nächstgelegenen Nachbarblocks Bestimmen, ob ein Block, der gegenwärtig codiert wird, ein redundanter Block ist oder nicht; und
d) auf Basis des in Schritt c) bestimmten Ergebnisses Erzeugen eines Ausgangs-Bitstroms.

**8.** Verfahren nach Anspruch 7, wobei, wenn in Schritt c) bestimmt wird, dass der gegenwärtig codierte Block der redundante Block ist, der in Schritt c) erzeugte Bitstrom Informationen über den nächstgelegenen Nachbarblock über nach dem in Schritt b) gesuchten nächstgelegenen Nachbarblock anstelle von Informationen über den aktuellen Block enthält.

**9.** Verfahren nach Anspruch 8, wobei die Informationen über den nächstgelegenen Nachbarblock Indexinformationen des nächstgelegenen Nachbarblocks sind, nach denen in der Zeit-Frequenzband-Tabelle gesucht wird.

**10.** Verfahren nach Anspruch 7, 8 oder 9, wobei, wenn in Schritt c) bestimmt wird, dass der gegenwärtig codierte Block nicht der redundante Block ist, der in Schritt d) erzeugte Bitstrom Informationen über den aktuellen Block enthält.

**11.** Verfahren nach einem der Ansprüche 7 bis 10, wobei in Schritt b) ein Suchbereich des nächstgelegenen Nachbarblocks Blöcke vor dem Block enthält, der gegenwärtig codiert wird.

**12.** Verfahren nach einem der Ansprüche 7 bis 11, wobei in Schritt b) Bestimmung des nächstgelegenen Nachbarblocks auf dem euklidischen Abstand zwischen dem aktuellen Block und einem Objektblock basiert.

**13.** Verfahren nach einem der Ansprüche 7 bis 12, wobei die Informationen über den nächstgelegenen Nachbarblock Skalierungsfaktorinformationen enthalten.

**14.** Vorrichtung zum Codieren digitaler Audiosignale, die umfasst:

eine Einheit (322) zum Erzeugen einer Zeit-Frequenzband-Tabelle, die so eingerichtet ist, dass sie auf Basis eines Eingangs-Audiosignals eine Zeit-Frequenzband-Tabelle erzeugt, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt;
eine Einheit (324) zum Suchen eines nächstgelegenen Nachbarblocks und zum Erzeugen von Informationen über den nächstgelegenen Nachbarblock, die so eingerichtet ist, dass sie auf Basis der erzeugten Zeit-Frequenzband-Tabelle nach einem nächstgelegenen Nachbarblock eines Blocks sucht, der gegenwärtig codiert wird, und Informationen über den nächstgelegenen Nachbarblock erzeugt: und
eine Bitstrom-Packeinheit (330), die so eingerichtet ist, dass sie einen Bitstrom erzeugt, der die erzeugten Informationen über den nächstgelegenen Nachbarblock enthält.

**15.** Vorrichtung nach Anspruch 14, wobei die Frequenz des Blocks, der gegenwärtig erzeugt wird, einer Schwellenwertfrequenz gleich ist oder darüber liegt und die Bitstrom-Packeinheit einen Bitstrom erzeugt, der Blockinformationen über einen Block, der in einem Frequenzband enthalten ist, das unter der Schwellenwertfrequenz liegt, und Informationen über einen nächstgelegenen Nachbarblock eines Blocks enthält, der in einem Frequenzband enthalten ist, das der Schwellenwertfrequenz gleich ist oder darüber liegt.

17

**16.** Vorrichtung nach Anspruch 14 oder 15, wobei die Informationen über den nächstgelegenen Nachbarblock Indexinformationen des nächstgelegenen Nachbarblocks sind, nach denen in der Zeit-Frequenzband-Tabelle gesucht wird.

**17.** Vorrichtung zum Codieren digitaler Audiosignale, die umfasst:

eine Einheit (622) zum Erzeugen einer Zeit-Frequenzband-Tabelle, die so eingerichtet ist, dass sie auf Basis eines Eingangs-Audiosignals eine Zeit-Frequenzband-Tabelle erzeugt, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals und einer Vielzahl folgender Zeitrahmen abdeckt;
eine Einheit (624) zum Suchen eines nächstgelegenen Nachbarblocks, die so eingerichtet ist, dass sie auf Basis der erzeugten Zeit-Frequenzband-Tabelle nach einem nächstgelegenen Nachbarblock eines Blocks sucht, der gegenwärtig codiert wird;
eine Einheit (626), die über einen redundanten Block entscheidet und so eingerichtet ist, dass sie auf Basis des nächstgelegenen Nachbarblocks bestimmt, ob der gegenwärtig codierte Block ein redundanter Block ist oder nicht; und
eine Bitstrom-Erzeugungseinheit (630), die so eingerichtet ist, dass sie auf Basis des in der Einheit zum Entscheiden über einen redundanten Block bestimmten Ergebnisses einen Ausgangs-Bitstrom erzeugt.

**18.** Vorrichtung nach Anspruch 17, wobei, wenn die Einheit zum Entscheiden über einen redundanten Block bestimmt, dass der gegenwärtig codierte Block der redundante Block ist, die Bitstrom-Erzeugungseinheit Informationen über den nächstgelegenen Nachbarblock, nach dem in der Einheit zum Suchen des nächstgelegenen Nachbarblocks gesucht wird, anstelle von Informationen über den aktuellen Block in den Ausgangs-Bitstrom einschließt.

**19.** Vorrichtung nach Anspruch 17 oder 18, wobei, wenn die Einheit zum Entscheiden über Redundanz bestimmt, dass der gegenwärtig codierte Block nicht der redundante Block ist, die Bitstrom-Erzeugungseinheit die Informationen über den aktuellen Block in den Ausgangs-Bitstrom einschließt.

**20.** Vorrichtung nach Anspruch 18, wobei die Informationen über den nächstgelegenen Nachbarblock Indexinformationen des nächstgelegenen Nachbarblocks sind, nach denen in der Zeit-Frequenzband-Tabelle gesucht wird.

**21.** Decodierverfahren zum Decodieren eines Audiosignals, das zusätzliche Informationen über einen vorgegebenen Bereich des Audiosignals enthält, das umfasst:

a) Decodieren eines Blocks, der nicht in dem vorgegebenen Bereich enthalten ist, aus einem Eingangs-Audio-Bitstrom;
b) auf Basis der Daten des decodierten Blocks Erzeugen einer Zeit-Frequenzband-Tabelle, die dem vorgegebenen Bereich entspricht, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt; und
c) unter Verwendung der erzeugten Zeit-Frequenzband-Tabelle Rekonstruieren eines aktuellen Blocks, der in dem vorgegebenen Bereich enthalten ist, auf Basis der zusätzlichen Informationen über den vorgegebenen Bereich des Audiosignals.

**22.** Verfahren nach Anspruch 21, wobei die zusätzlichen Informationen Indexinformationen über einen nächstgelegenen Nachbarblock eines aktuellen Blocks in dem vorgegebenen Bereich enthalten.

**23.** Verfahren nach Anspruch 21 oder 22, wobei der vorgegebene Bereich ein Hochfrequenzbereich ist.

**24.** Verfahren nach Anspruch 21, 22 oder 23, wobei die in Schritt b) erzeugte Zeit-Frequenzband-Tabelle durch den in Schritt c) rekonstruierten aktuellen Block aktualisiert wird.

**25.** Verfahren nach Anspruch 21, 22, 23 oder 24, wobei die zusätzlichen Informationen Skalierungsfaktorinformationen enthalten.

**26.** Decodierverfahren zum Decodieren eines digitalen Audiosignals, das umfasst:

a) Extrahieren von Informationen über den nächstgelegenen Nachbarblock aus einem Eingangs-Audio-Bitstrom;

b) auf Basis des Eingangs-Audio-Datenstroms Erzeugen einer Zeit-Frequenzband-Tabelle, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt;

c) auf Basis der extrahierten Informationen über den nächstgelegenen Nachbarblock Bestimmen, ob ein gegenwärtig decodierter Block ein redundanter Block ist oder nicht; und

d) wenn der gegenwärtig decodierte Block der redundante Block ist. Rekonstruieren des redundanten Blocks unter Verwendung der erzeugten.Zeit-Frequenzband-Tabelle auf Basis der extrahierten Informationen über den nächstgelegenen Nachbarblock.

27. Verfahren nach Anspruch 26, das des Weiteren das Rekonstruieren eines vollständigen Spektrums, das dem Eingangs-Audio-Bitstrom entspricht, unter Verwendung des rekonstruierten redundanten Blocks umfasst.

28. Verfahren nach Anspruch 27, wobei Schritt c) des Weiteren umfasst:

Aktualisieren der Zeit-Frequenzband-Tabelle auf Basis des rekonstruierten redundanten Blocks.

29. Verfahren nach Anspruch 27 oder 28, wobei die Informationen über den nächstgelegenen Nachbarblock Skalierungsfaktorinformationen enthalten.

30. Decodiervorrichtung zum Decodieren eines Audiosignals, das zusätzliche Informationen über einen vorgegebenen Bereich des Audiosignals enthält, das umfasst:

eine Decodiereinheit (1020), die so eingerichtet ist, dass sie einen Block, der in dem vorgegebenen Bereich enthalten ist, aus einem Eingangs-Audio-Bitstrom decodiert; und

eine Nachverarbeitungseinheit (1030), die so eingerichtet ist, dass sie auf Basis der Daten des decodierten Blocks eine Zeit-Frequenzband-Tabelle erzeugt, die dem vorgegebenen Bereich entspricht, und unter Verwendung der erzeugten Zeit-Frequenzband-Tabelle einen aktuellen Block, der in dem vorgegebenen Bereich enthalten ist, auf Basis der zusätzlichen Informationen Ober den vorgegebenen Bereich des Audiosignals rekonstruiert, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt.

31. Vorrichtung nach Anspruch 30, wobei die zusätzlichen Informationen Indexinfor mationen über einen nächstgelegenen Nachbarblock eines aktuellen Blocks in dem vorgegebenen Bereich enthalten.

32. Vorrichtung nach Anspruch 30 oder 31, wobei der vorgegebene Bereich ein Hochfrequenzbereich ist.

33. Vorrichtung nach Anspruch 30, 31 oder 32, wobei die erzeugte Zeit-Frequenzband-Tabelle durch einen rekonstruierten aktuellen Block aktualisiert wird.

34. Decodiervorrichtung zum Decodieren eines digitalen Audiosignals, die umfasst:

eine Einheit (810) zum Extrahieren von Informationen Ober einen nächstgelegenen Nachbarblock, die so eingerichtet ist, dass sie Informationen über einen nächstgelegenen Nachbarblock aus einem Eingangs-Audio-Bitstrom extrahiert;

eine Einheit (822) zum Erzeugen einer Zeit-Frequenzband-Tabelle, die so eingerichtet ist, dass sie auf Basis des Eingangs-Audio-Bitstroms eine Zeit-Frequenzband-Tabelle erzeugt, wobei jedes Element der Zeit-Frequenzband-Tabelle eine Vielzahl von Spektrumkoeffizienten hat und die Zeit-Frequenzband-Tabelle eine Vielzahl von Frequenzbändern in einem Zeitrahmen des digitalen Audiosignals sowie einer Vielzahl folgender Zeitrahmen abdeckt; und

eine Einheit (824) zum Rekonstruieren eines redundanten Blocks, die so eingerichtet ist, dass sie auf Basis der extrahierten Informationen über den nächstgelegenen Nachbarblock bestimmt, ob ein gegenwärtig decodierter Block ein redundanter Block ist oder nicht, und wobei die Einheit zum Rekonstruieren des redundanten Blocks so eingerichtet ist, dass sie, wenn der gegenwärtig decodierte Block der redundante Block ist, den redundanten Block unter Verwendung der erzeugten Zeit-Frequenzband-Tabelle auf Basis der extrahierten Informationen über den nächstgelegenen Nachbarblock rekonstruiert.

**35.** Vorrichtung nach Anspruch 34, wobei die Einheit zum Rekonstruieren des redundanten Blocks ein vollständiges Spektrum, das dem Eingangs-Audio-Bitstrom entspricht, unter Verwendung des rekonstruierten redundanten Blocks rekonstruiert.

**36.** Vorrichtung nach Anspruch 35, wobei die Einheit zum Erzeugen einer Zeit-Frequenzband-Tabelle die Zeit-Frequenzband-Tabelle auf Basis des rekonstruierten redundanten Blocks aktualisiert.

# FIG. 1

INPUT AUDIO SIGNAL

110
FILTER BANK

140
MDCT UNIT

150
QUANTIZATION AND HUFFMAN ENCODING UNIT

ENCODED AUDIO SIGNAL

WINDOW SWITCHING

120
FFT UNIT

130
PSYCHOACOUSTIC MODEL UNIT

# FIG. 2

$|X(F)|$

0

f

ENCODER

ENCODER

$|X(F)|$

+SBR

0

f

INPUT ————→ TRANSMISSION ————→ OUTPUT

# FIG. 3

```
INPUT AUDIO SIGNAL ──────▶ ┌─310──────────┐              ┌─330──────────┐      TFBR
                           │   ENCODING   │ ───────────▶ │  BITSTREAM   │ ──▶ BITSTREAM
                           │     UNIT     │              │   PACKING    │
                           └──────────────┘              │     UNIT     │
                                  │                       └──────────────┘
                                  │                              ▲
                                  │                              │
          ┌ ─ ─ ─ ─ ─ ─ ─ ─ ─ ─ ─│─ ─ ─ ─ ─ ─ ─ ─ ─ ─ ─ ─ ─ ─ │─ ─ ─ 320 ─ ┐
          │                       ▼   ┌─322                      │   ┌─324
          │  ┌──────────────────────────┐        ┌──────────────────────────────┐ │
          │  │  TIME-FREQUENCY BAND     │        │  NEAREST NEIGHBOR BLOCK       │
          │  │  TABLE GENERATION UNIT   │ ─────▶ │  SEARCHING AND NEAREST        │ │
          │  └──────────────────────────┘        │  NEIGHBOR BLOCK INFORMATION   │
          │                                       │  GENERATION UNIT              │ │
          │                                       └──────────────────────────────┘
          └ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

# FIG. 4

| | | | | | | | |
|---|---|---|---|---|---|---|---|
| $B(i-M,0)$ | | | | | | | |
| ⋮ | | | | | | | |
| $B(i-2,0)$ | | | | | | | |
| $B(i-1,0)$ | | | $B(i-1,j)$ | | | | |
| $B(i,0)$ | $B(i,1)$ | ••• | $B(i,j)$ | $B(i,j+1)$ | $B(i,j+2)$ | ••• | $B(i,N-1)$ |
| $B(i+1,0)$ | | | $B(i+1,j)$ | | | | |
| ⋮ | | | | | | | |

FRAME ↓

FREQUENCY →

# FIG. 5

START

TRANSFORM INPUT AUDIO SIGNAL ──510

GENERATE TIME-FREQUENCY BAND TABLE ──520

CURRENT BLOCK FREQUENCY > $j_{TH}$? ──530

YES

NO

SEARCH FOR NEAREST NEIGHBOR BLOCK AND GENERATE NEAREST NEIGHBOR BLOCK INFORMATION ──540

ENCODE CURRENT BLOCK ──550

GENERATE TFBR BITSTREAM INTO WHICH NEAREST NEIGHBOR BLOCK INFORMATION IS INSERTED ──560

# FIG. 6

INPUT
AUDIO SIGNAL

610
ENCODING
UNIT

630
BITSTREAM
PACKING
UNIT

TFBR
BITSTREAM

620

622
TIME-FREQUENCY BAND
TABLE GENERATION UNIT

624
NEAREST NEIGHBOR
BLOCK SEARCHING
UNIT

626
REDUNDANT BLOCK
DECISION UNIT

# FIG. 7

START

TRANSFORM INPUT AUDIO SIGNAL — 710

GENERATE TIME-FREQUENCY BAND TABLE — 720

SEARCH FOR AND DETERMINE NEAREST NEIGHBOR BLOCK — 730

740 $Dmin(i,j) < Tj?$

YES

NO

750 INSERT NEAREST NEIGHBOR BLOCK INFORMATION INTO BITSTREAM INSTEAD OF CURRENT BLOCK DATA

760 INSERT CURRENT BLOCK DATA INTO BITSTREAM

# FIG. 8

# FIG. 9

```
                    ┌─────────┐
                    │  START  │
                    └─────────┘
                         │
                         ▼
        ┌──────────────────────────────┐
        │   UNPACK INPUT TFBR          │──── 910
        │       BITSTREAM              │
        └──────────────────────────────┘
                         │
                         ▼
                    ╱─────────────╲
               YES ╱  CURRENT BLOCK(i,j) ╲  NO
          ◄──────╱   = REDUNDANT BLOCK    ╲──────►
                 ╲          ?             ╱      920
                  ╲─────────────────────╱
                         
   ┌──────────────────────────┐        ┌────────────────────┐
   │ RECONSTRUCT REDUNDANT    │◄─ ─ ─ ─│  DECODE CURRENT    │
   │ BLOCK USING TFBR         │        │      BLOCK         │──── 940
   │ PARAMETERS m_min, n_min  │◄─ ─ ─ ─│                    │
   └──────────────────────────┘        └────────────────────┘
        930              │                       │
                         ▼                       ▼
        ┌──────────────────────────────────────────────────┐
        │          RECONSTRUCT SPECTRUM                    │──── 950
        └──────────────────────────────────────────────────┘
```

## FIG. 10

1000

TFBR
BITSTREAM → BITSTREAM UNPACKING UNIT `/1010` → DECODING UNIT `/1020` → POST-PROCESSING UNIT `/1030` → OUTPUT AUDIO SIGNAL

TFBR PARAMETER

## FIG. 11

START

UNPACK INPUT TFBR BITSTREAM —— 1110

DECODE INPUT BLOCK —— 1120

RECONSTRUCT BLOCK WHICH IS NOT INPUT, BASED ON TFBR PARAMETERS —— 1130

RECONSTRUCT ENTIRE SPECTRUM —— 1140